# EUROPÄISCHE PATENTANMELDUNG

(11) **EP 4 794 304 A1**
(43) Veröffentlichungstag der Anmeldung: **19.08.2026**
(21) Anmeldenummer: 26158455.1
(22) Anmeldetag: 13.02.2026
(51) Int. Cl.: H04L 67/12, H04W 4/38, H04W 4/70

(54) **AUTONOMES, MODULARES SENSORSYSTEM ZUR ÜBERTRAGUNG VON SENSORDATEN**

(30) Priorität: 14.02.2025 DE 102025105510
(71) Anmelder: Asen, Benjamin, 96049 Bamberg (DE); Montgomery, Sina, 96049 Bamberg (DE)
(72) Erfinder: Asen, Benjamin, 96049 Bamberg (DE); Montgomery, Sina, 96049 Bamberg (DE)
(74) Vertreter: Kailuweit & Uhlemann Patentanwälte Partnerschaft mbB

(57) **Zusammenfassung**

Die vorliegende Erfindung betrifft ein modulares Sensorsystem zur Erfassung und/oder Weiterleitung von Sensordaten, umfassend mindestens eine Basiseinheit und mindestens aufweisend die folgenden Komponenten:
- zumindest eine Sensorschnittstelle,
- mindestens eine erste Kommunikationsschnittstelle,
- mindestens eine zweite Kommunikationsschnittstelle,
- mindestens eine Speichereinheit,
- mindestens eine Datenverarbeitungseinheit,

wobei die Basiseinheit eingerichtet ist, Sensordaten autonom und dezentral entweder über die erste Kommunikationsschnittstelle oder über die zweite Kommunikationsschnittstelle zu übertragen, wobei die Auswahl der Kommunikationsschnittstelle und den daraus resultierenden Übertragungsweg durch die Basiseinheit autonom und lokal auf Basis von mindestens einem technischen und/oder wirtschaftlichen Kriterium erfolgt,
sowie ein Verfahren zur effizienten Übertragung der erfassten Daten, mindestens aufweisend die folgenden Schritte:
i. Erfassen von Sensordaten durch mindestens ein Sensormodul und/oder von mindestens einer weiteren Basiseinheit,
ii. Bereitstellen und Zwischenspeichern der Sensordaten in der mindestens einen Speichereinheit,
iii. Autonome, lokale Entscheidung der Basiseinheit welcher Übertragungsweg der Sensordaten gewählt werden soll,
iv. Übertragung der Sensordaten über eine erste Kommunikationsschnittstelle oder über eine zweite Kommunikationsschnittstelle,

wobei die Entscheidung welche Kommunikationsschnittstelle zur Übertragung der Sensordaten gewählt wird, lokal und dezentral durch die Basiseinheit auf Basis mindestens eines technischen und/oder wirtschaftlichen Kriteriums und/oder eines empfangs- oder verbindungsqualitätsbezogenen Parameters erfolgt.

## Beschreibung

Die vorliegende Erfindung betrifft ein autonomes, dezentrales, modulares Sensorsystem mit Kriteriums-basierter Entscheidungslogik zur Erfassung und Übertragung von Sensordaten, ein Sensormodul zur Erfassung von Sensordaten sowie ein Verfahren zur effizienten Übertragung der erfassten Sensordaten, sowie die Auswahl und Nutzung unterschiedlicher Übertragungswege der Sensordaten.

Sensorsysteme sind in vielen Bereichen des täglichen Lebens und in verschiedenen Industrien weit verbreitet. Sie werden verwendet, um verschiedene Arten von Daten zu sammeln, wie z. B. Temperatur, Feuchtigkeit, Druck, Beschleunigung, Licht und andere Umweltbedingungen. Diese Daten können zur Überwachung, Steuerung oder Optimierung von Prozessen verwendet werden. Klassische Sensorsysteme aus dem Stand der Technik sind in eine permanent bestehende Netzwerkinfrastruktur integriert und werden dabei meist von einer zentralen Einheit gesteuert.

US 10 824 140 B2 beschreibt ein System zur netzwerksensitiven Datenerfassung, das für industrielle Umgebungen konzipiert ist. Es umfasst eine Vielzahl von Komponenten, darunter Sensoren, Kommunikationskreise und eine verteilte Datenverarbeitungsarchitektur. Der Fokus liegt dabei auf der kontinuierlichen Überwachung der Netzwerkbedingungen, um eine automatische Anpassung der Kommunikation zu realisieren. Das System zeichnet sich durch eine hohe Integration der Komponenten aus, wodurch eine enge Abstimmung zwischen Sensoren und der Datenverarbeitung erreicht wird. Diese Herangehensweise erlaubt eine umfassende Steuerung der Datenflüsse, erfordert jedoch eine sorgfältige Abstimmung der einzelnen Systemkomponenten. Die dynamische Anpassung an wechselnde Netzwerkbedingungen ermöglicht zwar eine Optimierung der Datenübertragung, stellt jedoch auch hohe Anforderungen an die Abstimmung der Protokolle und deren Reaktion auf veränderte Rahmenbedingungen.

US 2023 0196229 A1 betrifft ein System zur Datenerfassung in industriellen Umgebungen, das auf einer selbstorganisierenden Netzwerkarchitektur basiert. Es wird eine zentrale Datenaufnahmebox beschrieben, die Sensordaten erfasst, analysiert und über eine Netzwerksteuerungseinheit dynamisch an externe Systeme weiterleitet. Die Weiterleitung erfolgt dabei rollenspezifisch, sodass Übertragungswege flexibel an die Anzahl und Art der Anfragen angepasst werden können. Das Konzept betont eine dynamische Steuerung der Datenflüsse, die eine effiziente Anpassung an wechselnde Anforderungen ermöglicht. Diese Herangehensweise erfordert eine hohe Abstimmung der Systemkomponenten, um eine zuverlässige Funktion in komplexen Szenarien sicherzustellen.

US 2019/0174207 A1 beschreibt ein zentrales System zur Datenerfassung in industriellen Umgebungen, das darauf abzielt, Sensordaten aus einer Vielzahl von Quellen zu sammeln, zu verarbeiten und zu analysieren. Ein zentraler Bestandteil des Systems ist ein Multiplexor (MUX), der Datenströme aus verschiedenen Sensoren zusammenführt und mithilfe einer Steuerlogik verwaltet, um die Weiterleitung der Daten adaptiv anpassen zu können. Diese Herangehensweise ermöglicht eine dynamische Organisation der Datenflüsse und eine umfassende Verarbeitung der gesammelten Informationen. Das System setzt auf eine tiefgreifende Integration der Komponenten, um eine nahtlose Zusammenarbeit zwischen den Sensorelementen und der Datenverarbeitung zu gewährleisten. Dabei wird eine adaptive Steuerung verwendet, die speziell darauf ausgerichtet ist, komplexe Datenverarbeitungsaufgaben effizient zu bewältigen. Diese Architektur fördert eine leistungsstarke Verarbeitung, erfordert jedoch eine enge Abstimmung der einzelnen Elemente, um die Funktionalität in unterschiedlichen Einsatzszenarien sicherzustellen.

Der aktuelle Stand der Technik stellt hinsichtlich der Koordination von verschiedenen Sensoren, vornehmlich Systeme zur Verfügung, welche ein zentrales System und eine externe Steuerung aufweisen.

Die Aufgabe der vorliegenden Erfindung besteht darin, eine Lösung bereitzustellen, die die im Stand der Technik bekannten Nachteile bei der Integration von Sensoren in ein Netzwerk beseitigt und gleichzeitig eine effiziente Übertragung der erfassten Sensordaten an ein übergeordnetes System ermöglicht.

Erfindungsgemäß wird die Aufgabe durch ein modulares Sensorsystem gemäß dem unabhängigen Anspruch 1 gelöst.

Vorteilhafte Ausgestaltungen der Erfindung sind in den abhängigen Ansprüchen angegeben.

Ein erster Aspekt der Erfindung betrifft ein modulares Sensorsystem zur effizienten Sensordatenübertragung, umfassend mindestens eine Basiseinheit aufweisend
- mindestens eine Sensorschnittstelle,
- mindestens eine erste Kommunikationsschnittstelle,
- mindestens eine zweite Kommunikationsschnittstelle,
- mindestens eine Speichereinheit,
- mindestens eine Datenverarbeitungseinheit,
wobei die Basiseinheit eingerichtet ist, Sensordaten autonom und dezentral entweder über die erste Kommunikationsschnittstelle oder über die zweite Kommunikationsschnittstelle zu übertragen, wobei die Auswahl der Kommunikationsschnittstelle und den daraus resultierenden Übertragungsweg durch die Basiseinheit autonom und lokal auf Basis von mindestens einem technischen und/oder wirtschaftlichen Kriterium erfolgt.

In Ausführungsformen weist die Basiseinheit mindestens ein Sensormodul auf, welches derart eingerichtet ist, der Basiseinheit Sensordaten bereitzustellen. Das Sensormodul weist dabei eine integrierte Elektronik auf, welche zur Identifikation des Sensortyps, zur Energieversorgung des Sensors sowie zur Aufbereitung und Übergabe der erfassten Sensordaten eingerichtet ist.

In Ausführungsformen ist die Sensorschnittstelle derart eingerichtet, dass ein Sensormodul lösbar und frei konfigurierbar an der Sensorschnittstelle angeordnet werden kann.

In Ausführungsformen weist die Sensorschnittstelle mindestens ein Sensor-Hub auf. Unter "Sensor-Hub" wird eine Schnittstellenerweiterung verstanden, an welcher mehrere Sensormodule angeordnet werden können.

Dabei ist die erste Kommunikationsschnittstelle derart eingerichtet, dass die Sensordaten in ein externes Netzwerk übertragen werden. In Ausführungsformen ist die erste Kommunikationsschnittstelle als drahtgebundene oder drahtlose Schnittstelle ausgebildet. Es sind nur drahtgebundene und drahtlose Funktechnologien zu nutzen, welche derart eingerichtet sind, Daten in ein externes Netzwerk, insbesondere das Internet übertragen zu können.

Die zweite Kommunikationsschnittstelle ist derart eingerichtet, dass erhobene Sensordaten situationsabhängig an eine andere Basiseinheit übertragen werden können.

Unter dem Begriff "lokal" wird ein Ortsbezug verstanden, welcher sich nur auf die jeweilige Basiseinheit bezieht und von außen, das heißt außerhalb von der Basiseinheit nur teilweise Einfluss genommen werden kann. Unter teilweiser Einflussnahme ist die Benutzer-definierte Anpassung der Sensorauswahl, Gewichtung der Kriterien und Parameter zu verstehen.

Die Technologie der drahtlosen Datenübertragung ist in Ausführungsformen ausgewählt aus Kurzstrecken-Funktechnologie, einer Mittelstrecken-Funktechnologie oder einer Long-Range-Funktechnologie. Wobei die Long-Range-Funktechnologie in Ausführungsformen als zelluläre oder nicht-zelluläre Funktechnologie ausgebildet ist.

Erfindungsgemäß weist die Basiseinheit eine Datenverarbeitungseinheit auf, welche derart eingerichtet ist, die erhobenen Sensordaten und die Zustandsinformationen von mindestens einer weiteren Basiseinheit anhand der technischen und wirtschaftlichen Kriterien, sowie der empfangs- und verbindungsqualitätsbezogenen Parameter zu bewerten und auf Basis dieser Bewertung eine Entscheidung zu treffen über welche Kommunikationsschnittstelle der Basiseinheit die Sensordaten übertragen werden sollen.

Unter Datenverarbeitungseinheit wird eine lokale in der Basiseinheit integrierte Recheneinheit verstanden, welche zur Ausführung der autonomen Entscheidungslogik sowie der Verarbeitung der Sensordaten eingerichtet ist.

In Ausführungsformen kann das Sensorsystem nur eine Basiseinheit zur Sensordaten Aufnahme und Übertragung aufweisen, in weiteren Ausführungsformen weist das Sensorsystem mindestens zwei Basiseinheiten auf, welche zur Sensordaten Aufnahme und Übertragung der Sensordaten eingerichtet ist.

Die Entscheidung über das jeweilige Kommunikations- und Weiterleitungsverhalten erfolgt durch eine autonome, lokale Entscheidungslogik der Basiseinheit, die laufend neu unter Berücksichtigung mehrerer technischer und/oder wirtschaftlicher Kriterien getroffen wird, insbesondere Netzverfügbarkeit, Reichweite, Energiebedarf, zur Verfügung stehende Energiemenge durch einen Energiespeicher, Datenmenge, Verbindungsqualität und/oder Kosten, wobei die Gewichtung der Kriterien situationsabhängig variieren kann.

Ferner ist die Basiseinheit derart eingerichtet, dass mindestens ein empfangs- oder verbindungsqualitätsbezogener Parameter von einem Funknetz und/oder einer weiteren Basiseinheit, der mindestens einen Kommunikationsschnittstelle in regelmäßigen Intervallen erfasst werden.

Unter regelmäßigen Intervallen ist eine wiederkehrende, zeitlich begrenzte Erfassung zu verstehen, wobei die Zeitspanne zwischen zwei Erfassungen vorzugsweise im Bereich von Sekunden bis Minuten liegt und insbesondere abhängig vom Betriebszustand der Basiseinheit, der Schwarmzugehörigkeit und/oder energetischen Randbedingungen variieren kann.

Im Kontext der Erfindung sind unter empfangs- oder verbindungsqualitätsbezogenen Parametern die Signalstärke eines Signals, der Signal-Rausch-Verhältnis (SNR), Link Quality Indicator (LQI), Paketverlustraten und die Verbindungsstabilität und/oder Latenz, sowie nutzungs- oder volumenabhängige Übertragungskosten zu verstehen.

Unter diesen technischen und wirtschaftlichen Kriterien werden Netzverfügbarkeit, Reichweite, Energiebedarf, Datenmenge, Verbindungsqualität, zur Verfügung stehende Energie im Energiespeicher und Kostenaspekte verstanden. Wobei die oben aufgeführten einzelnen Kriterien und Parameter in Ausführungsformen situationsabhängig unterschiedlich gewichtet werden. Dabei entscheidet die Basiseinheit des modularen Sensorsystems fortlaufend neu, autonom und dezentral basierend auf einer lokalen Entscheidungslogik der Basiseinheit, welcher Übertragungsweg gewählt wird. Das gilt für jede Basiseinheit.

Diese Konstellation wird auch als Schwarmgemeinschaft verstanden. Unter intern wird dabei die Datenübertragung innerhalb einer Schwarmgemeinschaft verstanden. Die zweite Kommunikationsschnittstelle ist als drahtlose Schnittstelle ausgebildet.

Jede Basiseinheit ist derart eingerichtet, dass sie eigenständig, dezentral und autonom entscheidet, ob die erhobenen Sensordaten direkt über die erste Kommunikationsschnittstelle an ein externes Netzwerk übertragen werden oder innerhalb einer Schwarmgemeinschaft über die zweite Kommunikationsschnittstelle an mindestens eine weitere Basiseinheit, bevor die Sensordaten an ein externes Netzwerk übertragen werden.

Unter einer Schwarmgemeinschaft ist eine rein logische Gruppenzuordnung zu verstehen, welche von mindestens zwei Basiseinheiten anhand mindestens eines empfangs- oder verbindungsqualitätsbezogenen Parameters oder technischen und wirtschaftlichen Kriteriums, ohne Festlegung einer Netzwerktopologie, Rollenverteilung oder dauerhaften Kommunikationsbeziehung, Sensordaten übertragen, bevor sie in ein externes Netzwerk weitergeleitet werden.

Unter intern wird dabei die Datenübertragung innerhalb einer Schwarmgemeinschaft verstanden. Die zweite Kommunikationsschnittstelle ist als drahtlose Schnittstelle ausgebildet.

In Ausführungsformen kann ein Benutzer über eine Konfigurationsschnittstelle Rahmenbedingungen vorgeben, insbesondere einzelne Kommunikationsschnittstellen freigeben oder sperren sowie technische und/oder wirtschaftliche Kriterien unterschiedlich gewichten, ohne dass eine operative Steuerung der Basiseinheiten erfolgt.

Unter einem externen Netzwerk wird in Ausführungsformen das Internet verstanden.

Unter dem Begriff "*effizient"* wird die optimale Nutzung der verfügbaren Ressourcen des modularen Sensorsystems, insbesondere in Bezug auf Energieverbrauch, Datenübertragung, Verarbeitungskapazität und Kommunikationsverfügbarkeit, verstanden. Effizienz wird durch die Minimierung des Energiebedarfs, die Reduktion von Übertragungsverlusten, die schnelle und fehlerfreie Verarbeitung von Sensordaten sowie die zuverlässige und ressourcenschonende Datenkommunikation zwischen den Basiseinheiten und/oder einem externen Netzwerk erreicht. Dabei umfasst Effizienz auch die Fähigkeit des Systems, alternative Übertragungswege oder Betriebsmodi automatisch zu wählen, um eine kontinuierliche Funktionalität bei minimalem Ressourcenverbrauch sicherzustellen.

In Ausführungsformen weisen die Funktechnologien einen Sendebereich zwischen 0,2 m und 50 km auf.

In Ausführungsformen weist die Kurzstrecken-Funktechnologie einen Sendebereich zwischen 0,2 m und 50 m auf. Beispielsweise ist die Kurzstrecken-Funktechnologie ausgewählt aus Bluetooth, WLAN und ZigBee.

Bei Long-Range-Funktechnologien handelt es sich um Funktechnologien, welche eine Reichweite zwischen 2 km und 50 km aufweisen. Beispielsweise wäre dies ein LTE-Funknetz.

Zusätzlich weist die Basiseinheit eine Speichereinheit auf, die der Speicherung von Sensordaten oder der Zwischenspeicherung von Kommunikations- und Konfigurationsdaten dient.

Ein weiterer Vorteil besteht in der Fähigkeit, die Basiseinheit über verschiedene Kommunikationsschnittstellen mit anderen Basiseinheiten und einem externen Netzwerk (z. B. Server, Internet) zu verbinden. Diese Schnittstellen können in Ausführungsformen sowohl kabel- oder drahtgebundene als auch drahtlose Technologien umfassen, wie z. B. WLAN, Bluetooth, ZigBee, LoRaWAN, und unterstützen standardisierte sowie proprietäre Protokolle. Dies gewährleistet eine zuverlässige und flexible Datenübertragung zwischen den Komponenten des Systems.

Die Möglichkeit, mehrere unabhängige Kommunikationstechnologien oder Übertragungswege zu verwenden, erhöht die Ausfallsicherheit und Effizienz des Systems. Redundante Datenübertragungswege können beispielsweise sicherstellen, dass Sensordaten auch bei einem Ausfall einer Verbindung weiterhin zuverlässig an die zentrale Einheit übertragen werden. Dies verbessert die Robustheit des Systems und minimiert das Risiko von Datenverlusten.

In Ausführungsformen besteht die Möglichkeit, mehrere Basiseinheiten zu einer Schwarmgemeinschaft zusammenzufassen. Dies bietet zusätzliche Vorteile. Innerhalb des Schwarms kann eine Basiseinheit auf Basis der dezentralen, autonomen Entscheidungslogik Daten an eine weitere Basiseinheit weiterleiten. Dies ermöglicht eine optimierte Nutzung der verfügbaren Kommunikationsressourcen. Der Schwarmansatz erhöht zudem die Skalierbarkeit des Systems, da zusätzliche Basiseinheiten einfach integriert werden können.

Unter dem Begriff "lösbar und frei konfigurierbar" wird verstanden, dass die Verbindung eines Sensormoduls mit der Basiseinheit so gestaltet ist, dass das Sensormodul ohne dauerhafte mechanische Befestigung oder irreversible Eingriffe angebracht oder entfernt werden kann. Dies bedeutet, dass das Sensormodul beispielsweise durch Steck-, Klick- oder ähnliche Mechanismen befestigt wird, die eine einfache Demontage ohne Werkzeuge ermöglichen. Gleichzeitig erlaubt die freie Konfigurierbarkeit eine Anpassung oder Änderung der Sensorkomponenten, sodass unterschiedliche Sensortypen oder -funktionen in das System integriert werden können, ohne dass eine Modifikation der Basiseinheit erforderlich ist.

Die Kommunikationsschnittstellen können in Ausführungsformen sowohl drahtgebundene als auch drahtlose Technologien umfassen und dienen der flexiblen Anbindung an ein externes Netzwerk als reines Datenziel, ohne dass das externe Netzwerk Einfluss auf die Kommunikations- oder Weiterleitungsentscheidungen der Basiseinheit nimmt. Die Nutzung mehrerer alternativer Kommunikationsschnittstellen erhöht die Ausfallsicherheit der jeweiligen Basiseinheit, da bei eingeschränkter Verfügbarkeit eines Übertragungswegs automatisch ein alternativer Übertragungsweg gewählt werden kann.

Die Auswahl des jeweiligen Übertragungswegs erfolgt durch die autonome, lokale und dezentrale Entscheidungslogik der jeweiligen Basiseinheit auf Basis technischer und wirtschaftlicher Kriterien und ohne zentrale Steuerung oder Koordination durch eine externe Einheit.

In Ausführungsformen können mehrere Basiseinheiten zu einer Schwarmgemeinschaft zusammengefasst werden, wobei jede Basiseinheit unabhängig entscheidet, ob Sensordaten direkt an ein externes Netzwerk übertragen oder an eine weitere Basiseinheit weitergeleitet werden. Eine zentrale Koordination oder Lastverteilung ist in einer Schwarmgemeinschaft nicht vorgesehen.

In Ausführungsformen ist die Basiseinheit so konzipiert, dass sie mindestens die Signalstärke von WLAN zu mindestens einem WLAN-Accesspoint und/oder LTE zu mindestens einem Provider in regelmäßigen Intervallen misst. Dies unterstützt die Basiseinheit, neben Berücksichtigung eigener wirtschaftlicher und technischer Kriterien und den Parametern anderer Basiseinheiten in der Schwarmgemeinschaft den Basiseinheit, den besten verfügbaren Übertragungsweg für die Übertragung von Sensordaten zu wählen.

Die Erfassung empfangs- oder verbindungsqualitätsbezogener Parameter erfolgt lokal durch jede Basiseinheit und dient ausschließlich der eigenen Entscheidungsfindung. In Ausführungsformen erfolgt die Erfassung der empfangs- oder verbindungsqualitätsbezogenen Parameter im Rahmen einer optionalen Schwarmzugehörigkeit durch passives Empfangen periodischer Kurz-Broadcast-Signale über lizenzfreie Kurzstrecken- oder Sub-GHz-Funktechnologien anderer Basiseinheiten, ohne Verbindungsaufbau, ohne Antwort und ohne Weiterleitung der empfangenen Informationen.

Ein externes Netzwerk, in Ausführungsformen ein Server, ist in erster Linie als Datenempfänger oder Auswertungsplattform vorgesehen, ohne dabei Einfluss auf die laufenden Übertragungs- oder Weiterleitungsentscheidungen der Basiseinheiten zu nehmen.

Unter dem Begriff "Signalstärke" ist die messbare Intensität des empfangenen Funksignals, das von einer Kommunikationsschnittstelle der Basiseinheit empfangen wird,, zu verstehen. Die Signalstärke wird in der Regel als physikalische Größe ausgedrückt, beispielsweise in Dezibel-Milliwatt (dBm), und gibt Aufschluss über die Qualität und Stabilität der Funkverbindung. Eine höhere Signalstärke weist auf eine bessere Verbindungsqualität hin, während eine geringere Signalstärke auf mögliche Schwächen, wie größere Entfernung, physische Hindernisse oder Interferenzen, hindeutet. Die Basiseinheit ist so eingerichtet, dass sie diese Signalstärke regelmäßig misst, um die eigene Entscheidungsfindung im Rahmen der autonomen Auswahl von Kommunikationsschnittstelle und Übertragungsweg zu unterstützen.

Unter dem Begriff "Signal-Rausch-Verhältnis" ist eine Messgröße zu verstehen, welche das Verhältnis angibt zwischen dem Nutzsignal und dem Hintergrundrauschen in einem empfangenen Signal und wird üblicherweise in Dezibel (dB) gemessen.

Unter dem Begriff "Link-Quality-Indicator" ist eine Messgröße zu verstehen, welche die Stärke oder Qualität eines empfangenen Funk-Pakets angibt. Sie ist in der Regel als eine dimensionslose Größe, wobei ein niedriger Wert auf eine sehr schlechte und ein hoher Wert auf eine sehr gute Verbindung hinweist. In Ausführungsformen weist eine 0 auf eine schlechte Verbindung hin und der Wert 255 auf eine sehr gute Verbindung hin.

Unter dem Begriff "Paketverlustrate" ist eine Messgröße zu verstehen, welche in Prozent (%) angegeben ist und angibt, wie viele Datenpakete in einem Datenstrom zwischen Sender und Empfänger während der Datenübertragung verloren gegangen sind.

Unter dem Begriff "Latenz" ist eine Zeitverzögerung zu verstehen, welche zwischen einer Aktion oder Eingabe eines Ergebnisses und dem Anzeigen eines Ergebnisses entsteht. Sie wird in Millisekunden (ms) angegeben.

Unter der "Verbindungsstabilität" ist ein Maß für die zeitliche Beständigkeit einer Funkverbindung oder Empfangssituation zu verstehen, insbesondere im Hinblick auf Schwankungen der Signalstärke, Unterbrechungen der Verbindung oder variierenden Paketverlustraten über einen bestimmten Zeitraum.

Unter dem Begriff "Provider" ist ein Anbieter von Kommunikations- oder Internetdiensten, der eine drahtgebundene und/oder drahtlose Infrastruktur zur Anbindung an ein externes Netzwerk, insbesondere das Internet bereitstellt, zu verstehen. Die Basiseinheit nutzt eine solche Infrastruktur vorzugsweise zur externen Datenübertragung.

In einer bevorzugten Ausführungsform ist das modulare Sensorsystem dadurch gekennzeichnet, dass die Basiseinheit mindestens einen Energiespeicher aufweist, welcher als Batterie, Akkumulator, Superkondensator, thermischer Energiespeicher, Brennstoffzelle oder Solarzellenmodul mit Pufferspeicher ausgebildet ist.

Der Energiespeicher ist derart eingerichtet, die für den Betrieb der Basiseinheit und/oder der angeschlossenen Sensormodule notwendige Energie zuverlässig zu speichern und bereitzustellen. Dies ist insbesondere vorteilhaft in Situationen, in denen keine externe Stromversorgung verfügbar ist oder eine unterbrechungsfreie Energieversorgung essenziell ist, wie bei mobilen Anwendungen oder in sicherheitskritischen Szenarien.

Verschiedene Arten von Energiespeichern bieten spezifische Vorteile und ermöglichen eine Anpassung an die jeweiligen Anforderungen. Batterien und Akkumulatoren zeichnen sich durch eine hohe Energiedichte und lange Lebensdauer aus und eignen sich für den dauerhaften Betrieb. Superkondensatoren bieten eine hohe Leistungsdichte und ermöglichen eine schnelle Lade- und Entladefähigkeit, wodurch sie für Anwendungen mit kurzfristigem Energiebedarf oder plötzlichen Leistungsspitzen ideal sind.

Thermische Energiespeicher speichern Wärmeenergie und wandeln diese bei Bedarf in elektrische Energie um, was sie vielseitig einsetzbar macht. Brennstoffzellen gewährleisten eine kontinuierliche Stromversorgung durch die Umwandlung chemischer Energie, was sie besonders für langfristige und gleichmäßige Energieabgaben geeignet macht.

Die Auswahl des geeigneten Energiespeichertyps erfolgt auf Basis der spezifischen Anforderungen des Einsatzortes, der technischen Bedingungen sowie der Verfügbarkeit und Kosten der benötigten Komponenten. Eine flexible Anpassung an diese Faktoren ermöglicht eine optimale Energieversorgung, die die Effizienz und Leistungsfähigkeit des Gesamtsystems sicherstellt. Die Ausstattung der Basiseinheit mit einem Energiespeicher gewährleistet somit nicht nur eine autarke Energieversorgung, sondern steigert auch die Einsatzmöglichkeiten und Zuverlässigkeit des modularen Sensorsystems.

In einer bevorzugten Ausführungsform ist das modulare Sensorsystem dadurch gekennzeichnet, dass die Basiseinheit zur gleichzeitigen Verwendung mehrerer Energiespeicher ausgelegt ist.

Die gleichzeitige Nutzung unterschiedlicher Energiespeicher bietet spezifische Vorteile in Bezug auf Effizienz, Flexibilität und Zuverlässigkeit der Energieversorgung.

Ein wesentlicher Vorteil der gleichzeitigen Verwendung mehrerer Energiespeicher liegt in der Optimierung der Energieversorgung. Durch die Kombination von Energiespeichern mit unterschiedlichen Eigenschaften, wie hoher Energiedichte (z. B. Batterien oder Akkumulatoren) und hoher Leistungsdichte (z. B. Superkondensatoren), kann das Energiesystem gezielt auf unterschiedliche Anforderungen abgestimmt werden.

Darüber hinaus trägt die gleichzeitige Verwendung mehrerer Energiespeicher zur Verlängerung der Lebensdauer und Steigerung der Zuverlässigkeit des Systems bei. Die Verteilung der Energieanforderungen auf mehrere Energiespeicher reduziert die Belastung einzelner Speicher und minimiert das Risiko von Verschleiß, Leistungsabfall oder Ausfällen.

Die Verwendung mehrerer Energiespeicher im modularen Sensorsystem ermöglicht eine optimierte Energieversorgung, eine verlängerte Lebensdauer der Komponenten, eine gesteigerte Zuverlässigkeit und eine erhöhte Anpassungsfähigkeit an unterschiedliche Betriebsbedingungen.

In einer bevorzugten Ausführungsform ist das modulare Sensorsystem dadurch gekennzeichnet, dass mindestens ein Energiespeicher der Basiseinheit durch Energy-Harvesting-Technologien geladen wird, ausgewählt aus der Gruppe bestehend aus Solarenergie, thermoelektrischen Generatoren, Vibrations- oder Bewegungsenergie, Radiofrequenz-Harvesting, Wind- und Luftströmungsenergie sowie hydraulischen oder pneumatischen Druckunterschieden.

Energy-Harvesting-Technologien ermöglichen eine nachhaltige und effiziente Energieversorgung des Systems, indem sie die Abhängigkeit von externen Stromquellen reduzieren und den Betrieb auch in abgelegenen oder schwer zugänglichen Einsatzbereichen gewährleisten. Dies erhöht die Autonomie und Flexibilität des Systems. Die Nutzung dieser Technologien kann zudem Wartungskosten senken, da der Bedarf an häufigem Nachladen oder Austausch von Energiespeichern entfällt.

Die Auswahl der geeigneten Energy-Harvesting-Methode erfolgt auf Basis der spezifischen Einsatzbedingungen, wie den Umgebungsanforderungen, technischen Gegebenheiten sowie den Kosten und Verfügbarkeiten der benötigten Komponenten. Solarenergie eignet sich beispielsweise für den Einsatz im Freien, während Vibrations- oder Bewegungsenergie in mechanisch aktiven Umgebungen vorteilhaft ist. Radiofrequenz-Harvesting bietet Vorteile in elektromagnetisch aktiven Bereichen, während Wind- und Luftströmungsenergie oder hydraulische Druckunterschiede in spezifischen industriellen oder technischen Anwendungen effizient genutzt werden können.

Energy-Harvesting-Komponenten können flexibel in die Basiseinheit integriert oder separat betrieben werden. Eine direkte Integration spart Platz und reduziert den Installationsaufwand, während eine separate Konfiguration die Nachrüstung oder den Austausch einzelner Elemente erleichtert.

In weiteren Ausführungsformen weist die Basiseinheit einen Netzanschluss auf.

In Ausführungsformen weist das Sensormodul einen weiteren Energiespeicher auf, der zur Versorgung des Sensormoduls mit elektrischer Energie eingerichtet ist. Der Energiespeicher ermöglicht einen autarken Betrieb des Sensormoduls, insbesondere in Situationen, in denen keine externe Stromquelle zur Verfügung steht.

In einer bevorzugten Ausführungsform ist das modulare Sensorsystem so ausgelegt, dass jede Basiseinheit Konfigurationsdaten, insbesondere Sensor- und Kommunikationsschnittstellenkonfigurationen, sowie Software- oder Firmware-Updates von einem externen Netzwerk empfangen kann.

Weist eine Basiseinheit nicht über einen aktuell verfügbaren externen Übertragungsweg über mindestens eine erste Kommunikationsschnittstelle auf, ist sie derart eingerichtet, dass sie punktuell mindestens eine weitere Basiseinheit auffordert, welche selbst über einen externen Übertragungsweg über die erste Kommunikationsschnittstelle verfügt, ihr Konfigurationsdaten oder Updates direkt und ohne Aufbau einer Netzwerktopologie, Routing- oder Weiterleitungslogik über eine zweite Kommunikationsschnittstelle bereitzustellen.

Jede Basiseinheit prüft dabei die empfangenen Konfigurationsdaten oder Updates lokal und entscheidet eigenständig über deren Übernahme. Das externe System gibt dabei keine operativen Kommunikations- oder Weiterleitungsentscheidungen an die Basiseinheit vor.

Unter "Konfigurationsdaten" wird eine durch einen Benutzer vorgegebene Gewichtung von verschiedenen technisch und wirtschaftlichen Kriterien, sowie empfangs- oder verbindungsqualitätsbezogenen Parametern verstanden, welche als Entscheidungsgrundlage für den autonomen Betrieb der Basiseinheit dienen.

In Ausführungsformen kann ein Benutzer festlegen, welche der in der Basiseinheit zur Verfügung stehenden Übertragungswege genutzt und/oder ausgeschlossen werden, in welchen zeitlichen Intervallen oder ereignisbasiert Sensordaten erfasst, zwischengespeichert und übertragen werden sollen oder einzelne Sensorschnittstellen aktivieren/deaktivieren, sowie unter welchen Randbedingungen eine Weitergabe der Daten an eine weitere Basiseinheit oder ein externes Netzwerk oder System übertragen werden sollen.

Unter "ereignisbasiert" oder "ereignisabhängig" wird in Ausführungsformen eine Zustandsänderung der Basiseinheit wie beispielsweise der Ladezustand des Energiespeichers, oder die durch die Sensormodule aufgenommenen Sensordaten, wie z. B. Temperatur oder eine registrierte Bewegung, verstanden.

Die individuelle Konfiguration der Sensormodule ermöglicht zudem die Anpassung an spezifische Messaufgaben. Sensormodule können in Ausführungsformen für die Erfassung von Temperatur, Feuchtigkeit, Druck, Lichtintensität oder anderen Umgebungsparametern konfiguriert werden. Die Übertragung der erfassten Sensordaten erfolgt über die Basiseinheit an ein externes Netzwerk, das u. a. für die Verarbeitung, Analyse sowie Weitergabe der Daten verantwortlich ist.

Die flexible und laufende Anpassbarkeit von Schnittstellen und Übertragungswegen ermöglicht eine dynamische autonome Konfiguration, um wechselnde Anforderungen oder neue Einsatzszenarien zu erfüllen, wodurch die Lebensdauer und Vielseitigkeit des Systems gesteigert werden.

Insgesamt ermöglicht die Konfigurierbarkeit der Basiseinheit und Sensormodule eine optimierte Anpassung des modularen Sensorsystems an unterschiedliche Anwendungen, eine erhöhte Flexibilität bei der Datenübertragung sowie eine verbesserte Systemzuverlässigkeit und Benutzerfreundlichkeit.

Die Updates können verschiedene relevante Informationen umfassen, darunter geänderte Einstellungen, Software-Updates, Betriebs- und Schwellenparameter, Anpassungen der lokalen und dezentralen Entscheidungs- und Übertragungslogik, sowie sicherheits- und authentifizierungsrelevante Informationen. Dies fördert die kontinuierliche Verbesserung der Systemfunktionalität sowie der Sicherheit und Interoperabilität der Basiseinheit.

Die Auslösung und Durchführung von Updates erfolgt dezentral und autonom gesteuert durch die jeweilige Basiseinheit. Eine Basiseinheit fordert Updates selbständig an, sobald sie in Ausführungsformen unter Berücksichtigung ihrer aktuellen Konfiguration, ihres Energiezustands und der verfügbaren Übertragungswege eine geeignete Verbindung zu einem externen Netzwerk über mindestens eine erste Kommunikationsschnittstelle aufbauen kann.

In weiteren Ausführungsform erkennt die Basiseinheit anhand von in Beacon-Signalen benachbarter Basiseinheiten innerhalb einer Schwarmgemeinschaft übermittelten Versions- oder Zustandsinformationen, dass aktuellere Konfigurationsdaten oder Softwarestände verfügbar sind. In diesem Fall kann die Basiseinheit situationsabhängig eine benachbarte Basiseinheit dazu auffordern, ihr diese Updates über eine zweite Kommunikationsschnittstelle bereitzustellen, sofern dies unter den gegebenen Verbindungs-, Kosten- und Energieparametern als vorteilhaft bewertet wird.

Die Intervalle für die Updates können in Ausführungsformen zeitlich verzögert, ereignisbezogen oder zustandsabhängig erfolgen, beispielsweise bei der erstmaligen Inbetriebnahme einer Basiseinheit, bei erkannten Abweichungen von Konfigurationsparametern, bei Systemzustandsänderungen oder nach dem Erkennen aktuelleren Versionsstände benachbarter Basiseinheiten. Eine erfolgreiche Durchführung eines Updates ist dabei nicht an feste Intervalle oder permanente Verbindungen gebunden, sondern erfolgt opportunistisch, sobald geeignete Übertragungsbedingungen vorliegen.

In Ausführungsformen ist jede Basiseinheit derart eingerichtet, Zeitinformationen lokal zu erfassen und Zeitstempel für die Sensordaten zu verwenden. In weiteren Ausführungsformen erfolgt dabei eine zeitliche Abstimmung zwischen der Basiseinheit und dem angeschlossenem Sensormodul.

Diese zeitliche Abstimmung dient der konsistenten Zuordnung von Sensordaten und kann auf beliebige, geeignete Verfahren gestützt sein, wie zum Beispiel das Network Time Protocol (NTP), das Precision Time Protocol (PTP) oder andere geeignete Techniken und Protokolle, ohne eine kontinuierliche oder zentrale Zeitsynchronisation vorauszusetzen.

In Ausführungsformen ist das modulare Sensorsystem dadurch gekennzeichnet, dass jede Basiseinheit einen Identifikations-Code generiert, der eine Kennung der jeweiligen Basiseinheit als auch in Ausführungsformen eine Schwarmkennzeichnung aufweist. Dabei dient die Schwarmkennzeichnung zur logischen Gruppierung von Basiseinheiten, ohne dabei eine Koordination oder Steuerung der Basiseinheiten zu erzwingen.

Die Schwarmkennzeichnung ist in Ausführungsformen ein vom Benutzer vergebener Bezeichner und/oder eine Kennnummer, insbesondere aus dem Bereich der alphanumerischen Zeichen, welche von einer Basiseinheit verwendet wird, um andere Basiseinheiten mit derselben Kennzeichnung zu erkennen und eine situationsbezogene Zusammenarbeit zu ermöglichen.

Die Schwarmkennzeichnung dient der logischen Zuordnung gleichberechtigter Basiseinheiten und begründet weder eine feste Gruppenzugehörigkeit noch eine dauerhafte organisatorische oder hierarchische Struktur.

Die Basiseinheit ist derart eingerichtet, mindestens eine aggregierte Zustandsbewertung von anderen Basiseinheiten, in Bezug auf die technischen und wirtschaftlichen Kriterien, sowie den empfangs- und verbindungsqualitätsbezogenen Parametern, in regelmäßigen Intervallen zu erfassen und hieraus lokal mindestens eine eigene aggregierte Zustandsbewertung aus den Kriterien und Parametern zu bilden, wobei die zugrunde liegenden Einzelparameter und Kriterien nicht übertragen werden.

Basierend auf einer Bewertung durch die Basiseinheit, indem auf Grundlage des eigenen aggregierten Zustandswertes sowie mindestens eines von anderen Basiseinheiten empfangenen Zustandswertes, wird entschieden, ob die Übertragung der Sensordaten mittels der ersten und/oder zweiten Kommunikationsschnittstelle erfolgt.

Ferner ist die Basiseinheit derart eingerichtet, die eigenen lokalen oder die von mindestens einer weiteren Basiseinheit empfangenen Zustandswerte unter technischen und wirtschaftlichen Kriterien auszuwerten und auf Basis eines Vergleichs dieser Zustandswerte dezentral und autonom zu entscheiden, ob die Sensordaten direkt in ein externes Netzwerk geladen werden oder an eine weitere Basiseinheit übertragen werden, ohne dass hierbei eine feste Netzwerktopologie aufgebaut wird.

Diese Zustandswerte werden von einem Beacon-Signal in regelmäßigen Intervallen von den Basiseinheiten übertragen und empfangen. Dieses Beacon-Signal umfasst einen binären Code, welcher in Ausführungsformen nur wenige Byte groß ist. Der binäre Code umfasst in Ausführungsformen den Energiezustand der jeweiligen Basiseinheit, mindestens einen empfangs- oder verbindungsqualitätsbezogenen Parameter, sowie die Kennung der Basiseinheit, die Schwarmkennzeichnung und den aktuellen Software Stand.

In Ausführungsformen ist die Basiseinheit derart eingerichtet, Sensordaten lokal zwischenzuspeichern, wenn kein Übertragungsweg zu einer weiteren Basiseinheit oder einem externen Netzwerk verfügbar ist. Ferner ist die Basiseinheit derart eingerichtet diese Daten dann zu einem späteren Zeitpunkt, wenn mindestens ein Übertragungsweg wieder offensteht, eigenständig zu übertragen.

Eine weitere Ausführungsform beinhaltet, dass die Basiseinheiten mit einer Priorisierungsfunktion ausgestattet sind, die es erlaubt, zeitkritische Sensordaten bevorzugt zu übertragen, während weniger dringende Daten vorübergehend zurückgehalten werden.

In einer anderen Ausführungsform erfolgt die Datenübertragung verschlüsselt, um die Sicherheit der Sensordaten bei der Übertragung in ein externes Netzwerk und zwischen den Basiseinheiten zu gewährleisten. Dies ist insbesondere in Szenarien relevant, in denen sensible oder sicherheitsrelevante Daten verarbeitet werden.

Das Sensorsystem kann so ausgelegt sein, dass es eine Fehlerkorrektur implementiert, bei der die Basiseinheiten Datenübertragungsfehler erkennen und die betroffenen Datenpakete erneut senden. Dies erhöht die Robustheit und Zuverlässigkeit des Systems bei schwierigen Übertragungsbedingungen.

In Ausführungsformen ist das modulare Sensorsystem dadurch gekennzeichnet, dass die erste Kommunikationsschnittstelle der Basiseinheit als konduktive Schnittstelle ausgebildet ist.

In Ausführungsformen weist die erste Kommunikationsschnittstelle eine konduktive Schnittstelle auf, da dies eine stabile und störungsarme Datenübertragung ermöglicht. Unter einer "konduktiven Schnittstelle" wird eine drahtgebundene Schnittstelle verstanden Konduktive Verbindungen, wie Kabel- oder Steckverbindungen, sind weniger anfällig für elektromagnetische Störungen, was insbesondere in Umgebungen mit hoher elektrischer oder elektromagnetischer Aktivität von Vorteil ist.

Ein weiterer Vorteil besteht in der hohen Datenübertragungsrate, die durch konduktive Schnittstellen erreicht werden kann. Dies ermöglicht eine schnelle und effiziente Übertragung großer Datenmengen, was insbesondere in Anwendungen mit hohem Datenaufkommen, wie industriellen Steuerungssystemen oder präzisen Messdatenerfassungen, vorteilhaft ist.

Die Zuverlässigkeit der Verbindung wird ebenfalls gesteigert, da konduktive Schnittstellen physisch stabil und weniger anfällig für Verbindungsunterbrechungen sind, die bei drahtlosen Verbindungen durch Signalverluste oder Hindernisse auftreten können. Dies erhöht die Betriebsstabilität des Systems.

Zusätzlich bieten konduktive Schnittstellen Vorteile bei der Sicherheit der Datenübertragung. Durch die physische Verbindung wird das Risiko eines unbefugten Zugriffs oder Abfangens der Daten verringert, was insbesondere in sicherheitskritischen Anwendungen von Bedeutung ist. Schließlich ist die konduktive Schnittstelle kosteneffizient und einfach zu implementieren. Kabelverbindungen sind weit verbreitet, leicht verfügbar und benötigen keine komplexe Infrastruktur, was die Gesamtbetriebskosten des Systems reduziert und die Wartung vereinfacht.

In Ausführungsformen ist das modulare Sensorsystem dadurch gekennzeichnet, dass die erste Kommunikationsschnittstelle als kabellose Schnittstelle ausgebildet ist.

Kabellose Verbindungen können beispielsweise Funkverbindungen, Infrarotverbindungen, optische Verbindungen oder andere Arten von drahtlosen Verbindungen sein, die eine drahtlose Datenübertragung zwischen den Basiseinheiten und/oder einem externen Netzwerk oder System ermöglichen. Kabellose Verbindungen können eine hohe Mobilität und Flexibilität, eine einfache Installation und Wartung und eine hohe Skalierbarkeit bieten, können aber auch eine geringere Datenübertragungsrate, eine geringere Zuverlässigkeit und eine höhere Störanfälligkeit als konduktive Verbindungen haben.

In Ausführungsformen ist das modulare Sensorsystem dadurch gekennzeichnet, dass ein industrielles Kommunikationsprotokoll zur Kommunikation über die erste und/oder zweite Kommunikationsschnittstelle verwendet wird.

Erfindungsgemäß ist jede Basiseinheit als ein autonomes System ausgebildet und kann in Ausführungsformen vorübergehend mit mindestens einer weiteren Basiseinheit punktuell, Initiator-gesteuert und zeitlich begrenzt kommunizieren, ohne dass dadurch eine feste Netzwerkstruktur, also eine dauerhafte Kopplung zwischen zwei Basiseinheiten entsteht.

Die Datenübertragung zwischen zwei Basiseinheiten erfolgt ausschließlich auf Initiative einer einzelnen Basiseinheit und ohne Ausbildung eines dauerhaften Netzwerks, ohne Routing-Funktionen.

In einer Ausführungsform erfolgt die Datenübertragung zwischen den Basiseinheiten über ein Kurzstrecken-Funknetz, beispielsweise über eine energieeffiziente Funkverbindung wie Bluetooth Low Energy (BLE), wobei die Wahl der Funkverbindung von der zu übertragenden Datenmenge abhängig ist. Diese Verbindung dient der punktuellen Kontaktaufnahme und der Abstimmung einer einzelnen Datenübertragung zwischen zwei Basiseinheiten.

In Ausführungsformen sind die Basiseinheiten derart eingerichtet, dass Sensordaten nur bei Bedarf oder unter definierten Bedingungen übertragen werden, beispielsweise bei Überschreiten eines Schwellwertes oder nach Ablauf eines Zeitintervalls. Die Entscheidung über eine Übertragung wird dabei ausschließlich lokal von der jeweiligen Basiseinheit getroffen.

In einer weiteren Ausführungsform erfolgt die Datenübertragung asynchron. Sensordaten werden in einer Speichereinheit der Basiseinheit zwischengespeichert und zu einem späteren Zeitpunkt an eine andere Basiseinheit übertragen, ohne zeitliche Synchronisation zwischen den Basiseinheiten.

In Ausführungsformen wird zur Übertragung größerer Datenmengen zwischen zwei Basiseinheiten temporär eine drahtlose Hochdatenrate-Verbindung, insbesondere eine WLAN-Verbindung, genutzt. Die Aktivierung der WLAN-Verbindung erfolgt ausschließlich zeitlich begrenzt und nach vorheriger Initiator-gesteuerter Aushandlung über die Kurzstrecken-Kommunikationsschnittstelle. Dabei betreibt ausschließlich eine der Basiseinheiten für die Dauer der Übertragung einen temporären Zugangspunkt, ohne Ausbildung eines Netzwerks, ohne Mehrfachverbindungen und ohne Weiterleitung von Daten anderer Basiseinheit.

Unter "Initiator-gesteuert" wird die Kontaktaufnahme einer Basiseinheit verstanden, wobei die initiierende Basiseinheit über die zweite Kommunikationsschnittstelle ein Beacon-Signal mit einer gezielten Aufforderung an eine bestimmte weitere Basiseinheit aussendet, eine kurzzeitige Datenverbindung aufzubauen. Die initiierende Basiseinheit beabsichtigt hierbei, ihre erfassten Sensordaten an die weitere Basiseinheit weiterzuleiten, da diese nach den lokal bewerteten Kriterien einen vorteilhafteren Übertragungsweg zu einem externen Netzwerk aufweist.

Nach Abschluss der Datenübertragung wird die temporäre Verbindung beendet, und die beteiligten Basiseinheiten kehren in ihren autonomen Betriebszustand zurück.

In einer weiteren Variante erfolgt die Datenübertragung zwischen den Basiseinheiten asynchron. Sensordaten werden in der Speichereinheit zwischengespeichert und zu einem späteren Zeitpunkt an andere Basiseinheiten übermittelt, beispielsweise wenn die Netzwerkverbindung temporär unterbrochen war.

In Ausführungsformen weist das modulare Sensorsystem mindestens eine externe Datenverarbeitungseinheit auf, die als Webserver ausgebildet ist und lokal oder über ein Netzwerk, einschließlich eines Cloud-basierten Systems, betrieben wird. Der Webserver dient als zentrales Datenziel für die Erfassung, Speicherung, Verarbeitung und Visualisierung von Sensordaten, die von einzelnen Basiseinheiten über eine erste Kommunikationsschnittstelle übermittelt werden.

Der Webserver stellt ferner Konfigurationsdaten bereit, die durch einen Benutzer über eine Benutzeroberfläche erstellt oder angepasst werden können. Diese Konfigurationsdaten betreffen insbesondere Parameter einzelner Basiseinheiten, angeschlossener Sensoren sowie optionale Zuordnungen zu Schwarmgemeinschaften.

Die Basiseinheiten sind derart eingerichtet, dass sie die jeweils aktuellen Konfigurationsdaten in regelmäßigen oder ereignisbasierten Abständen vom Webserver abrufen. Die Anwendung der Konfigurationsdaten erfolgt lokal durch die jeweilige Basiseinheit. Der Webserver übernimmt keine unmittelbare Koordination oder Entscheidungsfindung innerhalb des modularen Sensorsystems.

In Ausführungsformen ist das modulare Sensorsystem derart eingerichtet, dass Benachrichtigungen und Alarme durch einen Webserver bzw. ein darauf betriebenes Portal ausgelöst werden. Die Auslösung dieser Benachrichtigungen erfolgt auf Grundlage von durch einen Benutzer festgelegten Regeln, die sich auf vom Webserver empfangene Sensordaten beziehen, insbesondere auf das Über-, Unterschreiten oder Erreichen vorgegebener Sensorwerte. Die Benachrichtigungen können über elektronische Kommunikationsmittel wie E-Mail, SMS oder Push-Nachrichten ausgegeben werden.

Zusätzlich können einzelne Basiseinheiten derart eingerichtet werden, dass sie bei Über-, Unterschreiten oder Erreichen eines vorgegebenen Sensorwertes lokal ein akustisches und/oder optisches Signal ausgeben. Die Auswertung der Sensorwerte sowie die Entscheidung zur Ausgabe des akustischen oder optischen Signals erfolgen ausschließlich lokal in der jeweiligen Basiseinheit und unabhängig von einer unmittelbaren Steuerung oder Auslösung durch den Webserver. Insbesondere sendet der Webserver keine Steuer- oder Alarmsignale an die Basiseinheit zur Auslösung der lokalen Signalisierung.

Ein weiterer Aspekt der Erfindung betrifft ein Verfahren zur Sensordatenübertragung mittels eines modularen Sensorsystems, umfassend die Schritte in empfohlener Reihenfolge:
i. Erfassen von Sensordaten durch mindestens ein Sensormodul und/oder von mindestens einer weiteren Basiseinheit,
ii. Bereitstellen und Zwischenspeichern der Sensordaten in der mindestens einen Speichereinheit,
iii. Autonome, lokale Entscheidung der Basiseinheit welcher Übertragungsweg der Sensordaten gewählt werden soll,
iv. Übertragung der Sensordaten über eine erste Kommunikationsschnittstelle oder über eine zweite Kommunikationsschnittstelle,
wobei die Entscheidung welche Kommunikationsschnittstelle zur Übertragung der Sensordaten gewählt wird, lokal und dezentral durch die Basiseinheit auf Basis mindestens eines technischen und/oder wirtschaftlichen Kriteriums und/oder eines empfangs- oder verbindungsqualitätsbezogenen Parameters erfolgt.

Die Basiseinheit weist mindestens eine erste Kommunikationsschnittstelle auf, die zur Übertragung der Sensordaten in ein externes Netzwerk, insbesondere an ein externes Server-System oder das Internet, eingerichtet ist.

Die erste Kommunikationsschnittstelle kann in Ausführungsformen drahtgebunden oder drahtlos ausgebildet sein und insbesondere Kurzstrecken-, Mittelstrecken- oder Long-Range-Kommunikationstechnologien umfassen.

Die Auswahl der Übertragung über die erste Kommunikationsschnittstelle erfolgt autonom, dezentral und lokal in der Basiseinheit durch die jeweilige Basiseinheit auf Grundlage mindestens eines lokal bewerteten technischen und/oder wirtschaftlichen Kriteriums, insbesondere Verfügbarkeit der Verbindung, Verbindungsqualität, Energiebedarf, Energiezustand des Energiespeichers, Datenmenge und/oder nutzungsabhängiger Übertragungskosten.

In Ausführungsformen ist die Basiseinheit in einer Schwarmgemeinschaft mindestens einer weiteren Basiseinheit zugeordnet.

In diesen Ausführungsformen prüft die Basiseinheit zusätzlich auf Basis der empfangs- und verbindungsqualitätsbezogenen Parameter, sowie der technischen und wirtschaftlichen Kriterien, ob eine indirekte Übertragung der Sensordaten in ein externes Netzwerk über eine weitere Basiseinheit vorteilhaft ist.

Hierzu erfasst die Basiseinheit über eine zweite Kommunikationsschnittstelle Zustandsinformationen mindestens einer weiteren Basiseinheit, welche Hinweise auf deren externe Übertragungsmöglichkeiten in ein externes Netzwerk enthalten.

Die zweite Kommunikationsschnittstelle ist insbesondere als drahtlose, nicht-zelluläre Funkkommunikation ausgebildet und dient ausschließlich dem punktuellen Informationsaustausch zwischen Basiseinheiten.

Die Entscheidung, Sensordaten an eine weitere Basiseinheit weiterzuleiten, erfolgt ausschließlich lokal, dezentral und autonom durch die sendende Basiseinheit unter Berücksichtigung der eigenen Übertragungsmöglichkeiten sowie der empfangenen Zustandsinformationen, ohne zentrale Steuerung oder systemweite Koordination.

In Ausführungsformen erfasst die Basiseinheit über die zweite Kommunikationsschnittstelle Zustandsinformationen mindestens einer weiteren Basiseinheit.

Die Zustandsinformationen umfassen insbesondere Hinweise auf die externe Übertragungsfähigkeit der jeweiligen Basiseinheit, beispielsweise Informationen zur Verfügbarkeit eines externen Übertragungswegs, zur Verbindungsqualität, zum Energiezustand und/oder zu nutzungsabhängigen Übertragungskosten.

Die Zustandsinformationen werden von den weiteren Basiseinheiten periodisch oder ereignisbasiert drahtlos bereitgestellt und passiv empfangen, ohne Aufbau einer bidirektionalen Verbindung und ohne Verpflichtung zur Weiterleitung fremder Daten.

Die Basiseinheit bewertet die empfangenen Zustandsinformationen ausschließlich lokal im Rahmen ihrer lokalen Entscheidungslogik und nutzt diese als zusätzliche Entscheidungsgrundlage bei der Auswahl eines Übertragungs- oder Weiterleitungswegs.

Die Übertragung von Sensordaten zwischen zwei Basiseinheiten erfolgt Initiator-gesteuert, zeitlich begrenzt und als Punkt-zu-Punkt-Verbindung.

Für kleinere Datenmengen erfolgt die Übertragung vorzugsweise über eine energieeffiziente Kurzstrecken-Funkverbindung, insbesondere über Bluetooth Low Energy.

Für größere Datenmengen kann temporär eine drahtlose Hochdatenrate-Verbindung aufgebaut werden, wobei eine der beteiligten Basiseinheiten für die Dauer der Übertragung einen temporären Zugangspunkt bereitstellt.

Nach Abschluss der Übertragung wird die Verbindung zwischen beteiligten Basiseinheiten beendet, und die beteiligten Basiseinheiten kehren in ihren autonomen Betriebszustand zurück.

Vor jeder Sensordatenübertragung bewertet die Basiseinheit lokal, autonom und dezentral mögliche Übertragungswege oder zur Verfügung stehende Funktechnologien.

In einem ersten Schritt wird geprüft, ob eine direkte Übertragung der Sensordaten über die erste Kommunikationsschnittstelle an ein externes Netzwerk unter der Berücksichtigung der technischen und wirtschaftlichen Kriterien, sowie der empfangs- und verbindungsqualitätsbezogenen Parameter möglich und zweckmäßig ist.

Nur sofern diese direkte Übertragung nicht möglich oder als nachteilig bewertet wird und eine Schwarmgemeinschaft besteht, prüft die Basiseinheit ergänzend eine indirekte Übertragung über eine weitere Basiseinheit.

Unabhängig von einer Schwarmzugehörigkeit kann die Basiseinheit jederzeit entscheiden, Sensordaten direkt über die erste Kommunikationsschnittstelle zu übertragen, sofern dies als vorteilhaft bewertet wird.

Die Bewertung erfolgt jeweils neu und unabhängig für jede einzelne Sensordatenübertragung.

Externe Netzwerke dienen ausschließlich als Datenziele oder zur Bereitstellung von Konfigurationsdaten und nehmen keinen Einfluss auf die laufenden Übertragungs- oder Weiterleitungsentscheidungen der Basiseinheiten.

Die Basiseinheiten in einer Schwarmgemeinschaft sind ferner derart eingerichtet, dass in bestimmten Zeitintervallen empfangs- oder verbindungsqualitätsbezogene Parameter ausgesendet werden. Dabei sind Basiseinheiten in Ausführungsformen derart eingerichtet, dass sie über einen definierten Zeitraum die oben genannten Parameter, der ihr zur Verfügung stehenden Übertragungswege, sowie der lokalen technischen und wirtschaftlichen Kriterien als aggregierte Zustandsinformationen aussenden. Ferner sind die Basiseinheiten in der Schwarmgemeinschaft derart eingerichtet, dass sie in einem definierten Zeitintervall über einen definierten Zeitraum die von anderen in der Schwarmgemeinschaft befindlichen Basiseinheiten ausgesendeten empfangs- oder verbindungsqualitätsbezogenen Parameter, sowie technischen und wirtschaftlichen Kriterien als aggregierte Zustandsinformationen empfangen. In Ausführungsformen sendet eine Basiseinheit beispielsweise alle 4 Sekunden ein Signal mit den entsprechenden aggregierten empfangs- oder verbindungsqualitätsbezogenen Parametern aus. Diese Basiseinheit ist ferner in Ausführungsformen derart eingerichtet alle 60 Sekunden für 5 Sekunden ein Signal einer weiteren Basiseinheit zu empfangen. Auf diese Weise können zwei Basiseinheiten innerhalb einer Schwarmgemeinschaft eine temporäre Verbindung miteinander eingehen und über die zweite Kommunikationsstelle Sensordaten miteinander austauschen.

In einer Schwarmgemeinschaft findet zwischen den Basiseinheiten keine dauerhafte feste Verbindung zur Datenübertragung statt. Innerhalb einer Schwarmgemeinschaft findet eine Verbindung zwischen zwei Basiseinheiten nur auf die im vorherigen Absatz beschriebenen Art und Weise statt.

In Ausführungsformen der Erfindung umfasst das Verfahren zur Sensordatenübertragung, dass zur Erfassung der Sensordaten unterschiedliche Sensoren an eine Basiseinheit angeschlossen sind und ihre Sensordaten über mindestens eine Sensorschnittstelle an die Basiseinheit übertragen.

Hierdurch wird eine modulare Ausgestaltung des Sensorsystems ermöglicht, bei der Sensoren ohne Änderung der Basiseinheit integriert oder ersetzt werden können.

Die Erfindung betrifft ferner ein Verfahren zur Einrichtung einer Basiseinheit in einem modularen Sensorsystem und umfasst mindestens die folgenden Schritte:
i. Erfassen von mindestens einem empfangs- oder verbindungsqualitätsbezogenen Parameter von mindestens einer Kommunikationsschnittstelle einer Basiseinheit,
ii. Anordnen der Basiseinheit an einem Installationsort unter Berücksichtigung der erfassten Parameter und
iii. Überprüfen der Betriebsbereitschaft der Basiseinheit.

Die Messung der verschiedenen empfangs- oder verbindungsqualitätsbezogenen Parameter kann dazu dienen, den optimalen Standort für die Basiseinheit zu bestimmen. Dies kann in Ausführungsformen durch Messung der Signalstärke an verschiedenen Standorten und Auswahl des Standortes mit der höchsten Signalstärke erfolgen.

Die Befestigung der Basiseinheit erfolgt in Ausführungsformen mittels geeigneter Befestigungsmittel, wie zum Beispiel Schrauben, Nägeln, Klebstoff, Klettverschluss oder anderen geeigneten Befestigungsmitteln. Die Befestigung kann so erfolgen, dass die Basiseinheit stabil und sicher an ihrem Standort befestigt ist und nicht leicht verschoben oder beschädigt werden kann.

Die Überprüfung der Betriebsbereitschaft umfasst insbesondere eine lokale Funktionsprüfung der Basiseinheit, einschließlich der Erfassung von Sensordaten, der Funktion mindestens einer Kommunikationsschnittstelle und der Energieversorgung.

In Ausführungsformen ist das Sensormodul zur Erfassung von Sensordaten in einem modularen Sensorsystem dadurch gekennzeichnet, dass das Sensormodul eingerichtet ist, mittels der Sensorschnittstelle Sensordaten an die Basiseinheit zu übertragen.

In Ausführungsformen erfolgt die Überprüfung über eine Benutzerschnittstelle, insbesondere über eine webbasierte Oberfläche oder eine Applikation, ohne Einfluss auf die autonome Funktionsweise der Basiseinheit. In Ausführungsformen werden über die Applikation die zur Verfügung stehenden Basiseinheiten eingesehen und die Konfigurationsdaten bereitgestellt.

In Ausführungsformen ist mindestens ein Sensormodul zur Erfassung von Sensordaten vorgesehen, das dazu eingerichtet ist, über die Sensorschnittstelle Sensordaten an die Basiseinheit zu übertragen.

Die Sensoren übertragen in Ausführungsformen drahtgebunden oder drahtlos, zum Beispiel über LAN, Ethernet, Bluetooth, Wi-Fi, ZigBee, Z-Wave oder andere geeignete drahtgebundene oder drahtlose Kommunikationstechnologien. Die Sensoren können in Ausführungsformen auch mit einer eigenen Stromversorgung, wie zum Beispiel einer Batterie oder einem Solarpanel, ausgestattet sein, oder sie können Strom von der Basiseinheit oder von einer anderen Stromquelle beziehen.

In Ausführungsformen weist das Sensormodul eine eigene Energieversorgung auf oder wird über die Basiseinheit mit Energie versorgt.

In Ausführungsformen ist das modulare Sensorsystem derart eingerichtet, dass die Sensorschnittstelle ein spezifisches Sensorprotokoll zur Übermittlung von Sensordaten verwendet, sodass Sensormodule, die dieses Sensorprotokoll unterstützen, per Plug-and-Play mit der Basiseinheit verbunden werden können.

Das Sensorprotokoll ist derart eingerichtet, dass beim Anschluss eines Sensormoduls eine automatische Erkennung und Initialisierung des Sensormoduls erfolgt, ohne dass eine manuelle Konfiguration oder Installation durch einen Benutzer erforderlich ist.

In Ausführungsformen basiert das Sensorprotokoll auf einem verbreiteten industriellen Standardprotokoll, insbesondere auf einem seriellen Kommunikationsprotokoll wie I²C oder SPI, wodurch eine hohe Kompatibilität mit unterschiedlichen Sensormodulen ermöglicht wird. Alternativ kann das Sensorprotokoll als proprietäres Protokoll ausgebildet sein, das an spezifische Anforderungen des Sensorsystems angepasst ist, insbesondere hinsichtlich Datenrate, Energieeffizienz oder Robustheit.

In weiteren Ausführungsformen ist das Sensorprotokoll für eine bidirektionale Kommunikation zwischen Sensormodul und Basiseinheit eingerichtet, sodass neben der Übertragung von Sensordaten auch Konfigurations- oder Steuerinformationen an das Sensormodul übermittelt werden können. Hierdurch können insbesondere Messparameter angepasst oder ereignisabhängige Funktionen ausgelöst werden.

In Ausführungsformen umfasst das Sensorprotokoll Definitionen für Datenformate und Datenstrukturen, Kommunikationsabläufe, Fehlererkennungs- und Fehlerkorrekturmechanismen sowie optional Sicherheits- und Authentifizierungsmechanismen.

Durch die Verwendung des spezifischen Sensorprotokolls wird eine modulare Erweiterbarkeit des Sensorsystems unterstützt, wobei Sensormodule einfach ausgetauscht oder ergänzt werden können. Gleichzeitig wird eine zuverlässige und konsistente Datenübertragung zwischen Sensormodulen und Basiseinheit ermöglicht.

In Ausführungsformen wird der Energiespeicher des Sensormoduls über die Basiseinheit geladen. Der Energiespeicher des Sensormoduls kann ferner dazu eingerichtet sein, elektrische Energie für weitere Komponenten in der Basiseinheit bereitzustellen.

Das modulare Sensorsystem ist so ausgestaltet, dass die Auswahl der in einem Sensormodul integrierten Sensoren flexibel durch einen Benutzer entsprechend den jeweiligen Anforderungen erfolgen kann. Die Sensoren können aus einer Gruppe unterschiedlicher Sensortypen ausgewählt werden, insbesondere aus Temperatur-, Feuchtigkeits-, Druck-, Beschleunigungs-, Licht- und weiteren Umweltsensoren.

Die Sensoren eines Sensormoduls sind derart eingerichtet, unterschiedliche physikalische oder umgebungsbezogene Messgrößen zu erfassen. Hierzu können verschiedene Messprinzipien eingesetzt werden, insbesondere thermische, optische, mechanische, elektrische, magnetische, chemische oder andere geeignete Sensortechnologien.

In Ausführungsformen können Sensormodule jederzeit ergänzt, ausgetauscht oder neu kombiniert werden, ohne dass eine Änderung der Basiseinheit erforderlich ist. Hierdurch wird eine hohe Anpassungsfähigkeit des Sensorsystems an unterschiedliche Einsatzbedingungen ermöglicht.

In weiteren Ausführungsformen kann die Erfassung von Sensorwerten ereignisgesteuert erfolgen. Hierzu können definierte Trigger vorgesehen sein, die zeitabhängig, ereignisabhängig oder bereichsabhängig ausgebildet sind. Die Trigger können extern vorgegeben oder innerhalb des Sensorsystems generiert werden.

Ein weiterer Aspekt der Erfindung betrifft die Verwendung eines modularen Sensorsystems in einem Verfahren zur Sensordatenübertragung sowie die Verwendung eines Sensormoduls in einem modularen Sensorsystem und einem Verfahren zur Sensordatenübertragung.

Die Erfindung ist nicht auf die dargestellten und beschriebenen Ausführungsformen beschränkt, sondern umfasst auch alle im Sinne der Erfindung gleich wirkenden Ausführungsformen. Ferner ist die Erfindung auch nicht auf die speziell beschriebenen Merkmalskombinationen beschränkt, sondern kann auch durch jede beliebige andere Kombination von bestimmten Merkmalen aller insgesamt offenbarten Einzelmerkmale definiert sein, sofern sich die Einzelmerkmale nicht gegenseitig ausschließen oder eine spezifische Kombination von Einzelmerkmalen nicht explizit ausgeschlossen ist.

### Ausführungsbeispiele

Nachfolgend soll die Erfindung anhand von Ausführungsbeispielen eingehender erläutert werden. Die Ausführungsbeispiel beziehen sich auf ein modulares Sensorsystem und sollen dabei die Erfindung beschreiben, ohne diese zu beschränken.

Anhand von Zeichnungen wird die Erfindung näher erläutert. Dabei zeigen
- **Fig. 1**: ein Sensornetzwerk in einer Schwarmgemeinschaft aus drei Basiseinheiten,
- **Fig. 2**: den schematischen Aufbau einer Basiseinheit zur Nutzung im Sensornetzwerk,
- **Fig. 3**: den schematischen Aufbau eines Sensormoduls,
- **Fig. 4**: den Einsatz des Sensornetzwerks in einem weit verzweigten Szenario mit unterschiedlicher Abdeckung durch LTE oder vergleichbare Technologien.

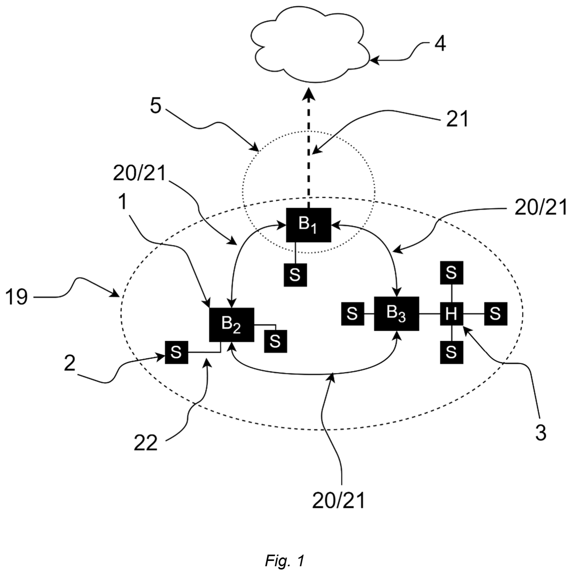

**Figur 1** zeigt in einem ersten Ausführungsbeispiel eines modularen Sensorsystems mit mehreren Basiseinheiten 1 (B1-B3), die optional zu einer Schwarmgemeinschaft 19 zusammengefasst sind. Jede Basiseinheit 1 ist als autonome Einheit ausgebildet und weist mindestens eine Sensorschnittstelle zum Anschluss von Sensormodulen 2 auf.

In der dargestellten Ausführungsform sind an der Basiseinheit 1 (B2) mehrere Sensormodule 2 direkt angeschlossen, während an der Basiseinheit 1 (B1) lediglich ein einzelnes Sensormodul 2 vorgesehen ist. Die Basiseinheit 1 (B3) ist beispielhaft über einen Sensorhub 3 mit mehreren Sensormodulen 2 verbunden.

Die Basiseinheiten 1 (B1-B3) sind so eingerichtet, dass sie Sensordaten entweder direkt über eine erste Kommunikationsschnittstelle 21 an ein externes Datennetz 4 übertragen oder situationsabhängig eine Weiterleitung an eine andere Basiseinheit 1 vornehmen können. Die Entscheidung hierüber erfolgt jeweils autonom und lokal durch die jeweilige Basiseinheit 1.

In der dargestellten Ausführungsform befindet sich die Basiseinheit 1 (B1) innerhalb des Empfangsbereichs 5 einer externen Funkverbindung, beispielsweise eines Mobilfunknetzes, während die Basiseinheiten 1 (B2, B3) keine direkte externe Verbindung aufweisen. Die Basiseinheiten 1 (B2, B3) können daher optional und Initiator-gesteuert eine punktuelle Übertragung ihrer Sensordaten an die Basiseinheit 1 (B1) veranlassen.

Die Übertragung zwischen den Basiseinheiten 1 erfolgt hierbei über eine zweite Kommunikationsschnittstelle 20 und ist zeitlich begrenzt sowie als Punkt-zu-Punkt-Verbindung ausgebildet. Eine feste Routenbildung, eine Rangfolge zwischen den Basiseinheiten oder eine systemweite Koordination ist nicht vorgesehen.

Die Basiseinheit 1 (B1) überträgt die von ihr selbst erfassten Sensordaten sowie optional empfangene Sensordaten weiterer Basiseinheiten 1 über die erste Kommunikationsschnittstelle 21 an das externe Netzwerk 4. Das externe Netzwerk 4 dient ausschließlich als Datenziel und übernimmt keine Steuerungs- oder Koordinationsfunktion innerhalb des Sensorsystems.

Die dargestellte Ausführungsform dient lediglich der Veranschaulichung einer möglichen Betriebsweise und beschränkt die Erfindung nicht auf die gezeigte Konfiguration.

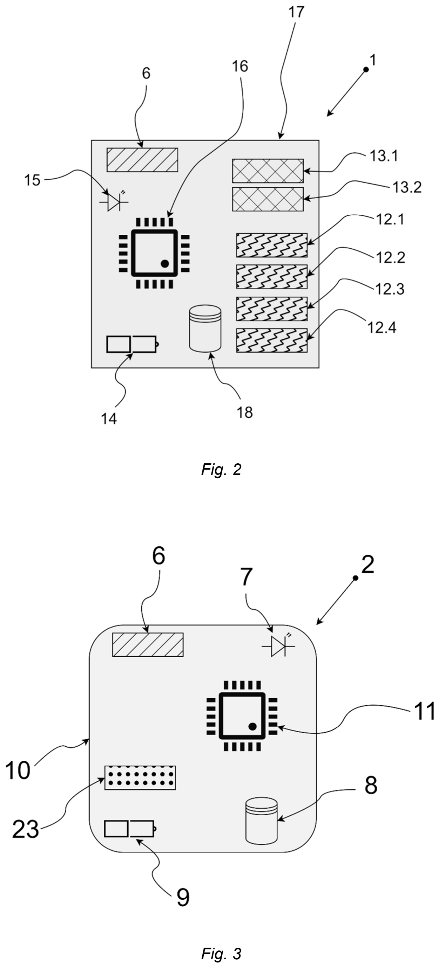

**Figur 2** zeigt in einem weiteren Ausführungsbeispiel eine Basiseinheit 1, die als Basiseinheit eines modularen Sensorsystems ausgebildet ist.

Die Basiseinheit 1 umfasst eine Datenverarbeitungseinheit 16, insbesondere einen Mikrocontroller oder eine vergleichbare Recheneinheit, die zur Verarbeitung von Sensordaten sowie zur Ausführung der lokalen Systemfunktionen eingerichtet ist. Ferner ist eine Speichereinheit 18 vorgesehen, die zur temporären oder dauerhaften Speicherung von Sensordaten, Zustandsinformationen und/oder Konfigurationsdaten dient. Die Speichereinheit 18 kann als flüchtiger Speicher, nicht-flüchtiger Speicher oder als Kombination mehrerer Speicherarten ausgebildet sein.

Weiterhin weist die Basiseinheit 1 einen Energiespeicher 14 auf, der zur Versorgung der Basiseinheit 1 mit elektrischer Energie eingerichtet ist. In der dargestellten Ausführungsform ist der Energiespeicher 14 als Akkumulator ausgebildet, wobei auch andere Energiespeicherformen vorgesehen sein können.

Die Basiseinheit 1 umfasst ferner eine Visualisierungseinrichtung 15, die dazu eingerichtet ist, Betriebszustände der Basiseinheit 1 lokal anzuzeigen. Hierzu können insbesondere Informationen über den Betriebszustand, laufende Datenübertragungen, Aktualisierungsvorgänge oder Fehlerzustände ausgegeben werden.

Die Basiseinheit 1 ist in einem Gehäuse 17 angeordnet, das an die jeweilige Einsatzumgebung angepasst ist und eine geeignete Schutzart aufweist. Die Schutzart kann abhängig vom Einsatzbereich variieren und ist nicht auf die dargestellten Beispiele beschränkt.

Über eine Sensorschnittstelle 6 ist die Basiseinheit 1 dazu eingerichtet, Sensordaten von mindestens einem Sensormodul zu empfangen sowie optional Daten an ein Sensormodul zu übertragen, insbesondere Konfigurations- oder Steuerinformationen.

Ferner weist die Basiseinheit 1 mindestens eine erste Kommunikationsschnittstelle 13.1, 13.2 zur Übertragung von Sensordaten in ein externes Datennetz sowie mindestens eine zweite Kommunikationsschnittstelle 12.1-12.4 zur drahtlosen Kommunikation mit mindestens einer weiteren Basiseinheit auf. Anzahl, Art und Ausgestaltung der Kommunikationsschnittstellen können je nach Ausführungsform variieren.

**Figur 3** zeigt in einem Ausführungsbeispiel eines Sensormoduls 2 zur Verwendung in einem modularen Sensorsystem.

Das Sensormodul 2 weist mindestens eine Sensorschnittstelle 6 auf, über welche eine Kommunikation mit einer Basiseinheit erfolgt. In der dargestellten Ausführungsform ist eine einzelne Sensorschnittstelle 6 vorgesehen.

Ferner umfasst das Sensormodul 2 eine Prozessoreinheit 11, insbesondere einen Mikrocontroller oder eine vergleichbare Recheneinheit, die zur Erfassung und Vorverarbeitung von Sensordaten eingerichtet ist. Der Begriff der Prozessoreinheit umfasst hierbei auch zugehörige Speicherbereiche, die flüchtig und/oder nicht-flüchtig ausgebildet sein können und insbesondere zur Speicherung von Betriebs- oder Konfigurationsparametern dienen.

Zusätzlich ist eine Speichereinheit 8 vorgesehen, die zur temporären oder dauerhaften Speicherung von Sensordaten und/oder Konfigurationsinformationen eingerichtet ist. Die Speichereinheit 8 kann als nicht-flüchtiger Speicher, beispielsweise als Flash-Speicher, ausgebildet sein.

Der Betriebszustand des Sensormoduls 2 kann über eine Visualisierungseinrichtung 7 lokal angezeigt werden. Hierzu können unterschiedliche Betriebszustände signalisiert werden, insbesondere eine aktive Datenaufnahme, eine Datenübertragung, ein Fehlerzustand, ein Initialisierungs- oder Update-Vorgang oder das Fehlen einer Kommunikation über die Sensorschnittstelle 6.

In der dargestellten Ausführungsform weist das Sensormodul 2 ferner einen Energiespeicher 9 zur Versorgung der lokalen Komponenten mit elektrischer Energie auf. Art und Ausgestaltung des Energiespeichers können je nach Ausführungsform variieren.

Die Komponenten des Sensormoduls 2 sind in einem Gehäuse 10 angeordnet, das an den jeweiligen Einsatzbereich angepasst ist und einen geeigneten Schutz der Komponenten gegenüber Umwelteinflüssen bietet.

Das Sensormodul 2 umfasst mindestens einen physikalischen Sensor 23 zur Erfassung einer Messgröße. Der Sensor 23 kann direkt im Sensormodul integriert oder über eine geeignete Verbindung mit diesem verbunden sein. Die erfassten Sensordaten werden von der Prozessoreinheit 11 vorverarbeitet und in der Speichereinheit 8 abgelegt.

Die Übertragung der Sensordaten an die Basiseinheit erfolgt über die Sensorschnittstelle 6. Die Sensordaten können unmittelbar nach der Erfassung oder zeitlich versetzt übertragen werden, beispielsweise zyklisch oder ereignisabhängig, unter Verwendung eines für die Sensorschnittstelle vorgesehenen Sensorprotokolls.

In Ausführungsformen ist die Basiseinheit dazu eingerichtet, über die Sensorschnittstelle 6 Abfrage- oder Konfigurationsinformationen an das Sensormodul zu übermitteln, um eine Erfassung von Sensordaten ereignisabhängig zu veranlassen. Die ereignisabhängige Erfassung kann insbesondere durch Zustandsänderungen eines weiteren Sensormoduls oder durch systemlokale Trigger ausgelöst werden.

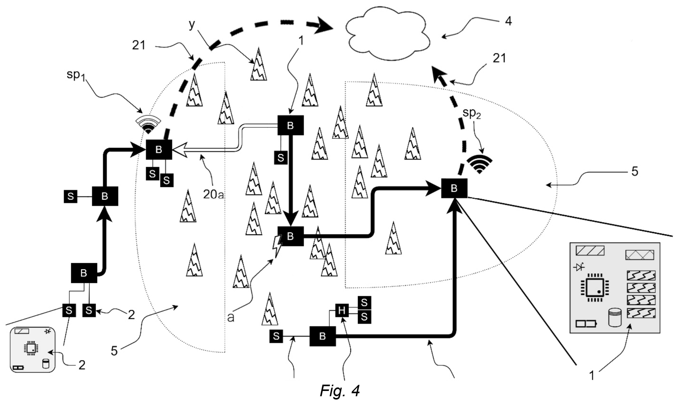

**Figur 4** zeigt in einem weiteren Ausführungsbeispiel des modularen Sensorsystems ein räumlich weitläufiges Einsatzszenario, insbesondere in einem naturnahen Gebiet, beispielsweise einem Waldgebiet mit dichter Vegetation, zum Beispiel Bäumen y, welche die externe Kommunikationsqualität lokal beeinflussen kann.

In der dargestellten Ausführungsform sind mehrere Basiseinheiten 1 mit jeweils zugeordneten Sensormodulen 2 verteilt innerhalb des Gebietes angeordnet. Es existieren Zonen mit unterschiedlicher externer Kommunikationsverfügbarkeit, beispielsweise ein Bereich mit mäßiger Verbindung (sp1) sowie ein Bereich mit guter oder sehr guter Verbindung (sp2).

Die Basiseinheiten 1 sind jeweils dazu eingerichtet, Sensordaten lokal zu erfassen, zwischenzuspeichern und autonom zu entscheiden, ob eine direkte externe Übertragung der Sensordaten an ein externes Netzwerk 4 erfolgt. Die Basiseinheit 1 im Bereich sp2 kann Sensordaten direkt über die erste Kommunikationsschnittstelle 21 an das externe Netzwerk 4 übertragen. Die Basiseinheit 1 im Bereich sp1 sendet auch Sensordaten, trotz nur mäßigem Empfang, direkt über die erste Kommunikationsschnittstelle 21 an das externe Netzwerk 4, da sie zu weit entfernt ist von dem Bereich sp2.

In Ausführungsformen sind einzelne Basiseinheiten 1 eingerichtet, Sensordaten optional und Initiator-gesteuert an eine weitere Basiseinheit 1 zu übertragen, wenn diese für die sendende Basiseinheit als geeignete Übertragungsmöglichkeit bewertet wird. Die Bewertung erfolgt lokal durch die sendende Basiseinheit und kann insbesondere darauf beruhen, dass die Ziel-Basiseinheit in der Vergangenheit Sensordaten erfolgreich an ein externes Datennetz übertragen hat oder als einzige aktuell erreichbare Basiseinheit identifiziert wurde, über die eine externe Übertragung erwartbar ist. Die Übertragung zwischen den Basiseinheiten 1 erfolgt hierbei punktuell und zeitlich begrenzt über eine zweite Kommunikationsschnittstelle 20 bzw.20a. Die Übertragungen sind opportunistisch und situationsabhängig ausgestaltet und erfolgen ausschließlich auf Initiative einzelner Basiseinheiten, ohne Ausbildung einer festen Weiterleitungskette oder einer dauerhaften Weiterleitungs- oder Netzwerkstruktur.

Im vorliegenden Beispiel übertragen die Basiseinheiten 1, die sich außerhalb der Empfangsbereiche sp1 und sp2 befinden, ihre Sensordaten intern über die zweite Kommunikationsschnittstelle Initiator-gesteuert an die jeweils beste erreichbare benachbarte Basiseinheit zur weiteren internen oder externen Übertragung.

In einem alternativen Beispiel fällt die mit einem Blitz a markierte Basiseinheit 1 technisch bedingt aus, woraufhin die benachbarte Basiseinheit 1 selbst entscheidend einen situationsbedingt anderen Übertragungsweg 20a wählt, den sie als energieeffizientesten Übertragungsweg bewertet.

Die Übertragung zwischen den Basiseinheiten erfolgt punktuell und zeitlich begrenzt über die zweite Kommunikationsschnittstelle 20 bzw. 20a. Die Auswahl der Ziel-Basiseinheit erfolgt lokal durch Vergleich der empfangenen Zustandswerte, ohne dass eine feste Weiterleitungskette, ein Sternnetz oder ein Mesh-Netzwerk aufgebaut wird.

Das externe Datennetz 4 dient ausschließlich als Datenziel für von einzelnen Basiseinheiten 1 über die erste Kommunikationsschnittstelle 21 bzw. 21a übertragene Sensordaten und übernimmt keine Steuerungs-, Koordinations- oder Entscheidungsfunktionen innerhalb des Systems.

In der dargestellten Ausführungsform können einzelne Sensormodule 2 energieabhängig betrieben werden, beispielsweise in Abhängigkeit von solar erzeugter Energie. Sensordaten werden in solchen Fällen zunächst lokal gespeichert und erst bei Vorliegen geeigneter Übertragungsbedingungen weitergeleitet.

Die in Figur 4 dargestellte Konfiguration verdeutlicht insbesondere die autonome Neupfadbildung bei Ausfall einzelner Basiseinheiten sowie die situationsabhängige Nutzung unterschiedlicher Kommunikationsschnittstellen unter variierenden Umwelt- und Abdeckungsbedingungen.

### Bezugszeichen

- 1: Basiseinheit
- 2: Sensormodul
- 3: Sensor-Hub
- 4: Externes Netzwerk (Server)
- 5: Empfangsbereich LTE
- 6: Sensorschnittstelle
- 7: Visualisierungseinrichtung Sensormodul (Applikation)
- 8: Speichereinheit Sensormodul
- 9: Energiespeicher Sensormodul
- 10: Gehäuse Sensormodul
- 11: Datenverarbeitungseinheit u. Speicher Sensormodul
- 12.1: erste zweite Kommunikationsschnittstelle
- 12.2: zweite zweite Kommunikationsschnittstelle
- 12.x: x-te zweite Kommunikationsschnittstelle
- 13.1: erste erste Kommunikationsschnittstelle
- 13.2: zweite erste Kommunikationsschnittstelle
- 13.x: x-te erste Kommunikationsschnittstelle
- 14: Energiespeicher Basiseinheit
- 15: Visualisierungseinrichtung Basiseinheit
- 16: Datenverarbeitungseinheit u. Speicher Basiseinheit
- 17: Gehäuse Basiseinheit
- 18: Speichereinheit Basiseinheit
- 19: Schwarmgemeinschaft
- 20: Kommunikation über zweite Kommunikationsschnittstelle
- 20a: Alternative Kommunikation über zweite Kommunikationsschnittstelle
- 21: Kommunikation über erste Kommunikationsschnittstelle
- 22: Kommunikation über Sensorschnittstelle
- 23: Physikalischer Sensor
- a: Potentieller Ausfall
- y: Baum in einem Wald
- sp1: Signalleistung zu einer zentralen Einheit (mäßige Verbindung)
- sp2: Signalleistung zu einer zentralen Einheit (gute, sehr gute Verbindung)

## Patentansprüche

1. Modulares Sensorsystem, umfassend mindestens eine Basiseinheit, aufweisend
- zumindest eine Sensorschnittstelle,
- mindestens eine erste Kommunikationsschnittstelle,
- mindestens eine zweite Kommunikationsschnittstelle,
- mindestens eine Speichereinheit,
- mindestens eine Datenverarbeitungseinheit,
**dadurch gekennzeichnet, dass** die Basiseinheit derart eingerichtet ist, Sensordaten autonom und dezentral entweder über die erste Kommunikationsschnittstelle oder über die zweite Kommunikationsschnittstelle zu übertragen, wobei die Auswahl der Kommunikationsschnittstelle und den daraus resultierenden Übertragungsweg durch die Basiseinheit autonom und lokal auf Basis von mindestens einem technischen und/oder wirtschaftlichen Kriterium erfolgt.

2. Modulares Sensorsystem nach Anspruch 1, **dadurch gekennzeichnet, dass** die erste Kommunikationsschnittstelle zur Übertragung der Sensordaten zu einem externen Netzwerk eingerichtet ist.

3. Modulares Sensorsystem, nach Anspruch 2, **dadurch gekennzeichnet, dass** die zweite Kommunikationsschnittstelle zur Übertragung von Sensordaten zu mindestens einer weiteren Basiseinheit eingerichtet ist.

4. Modulares Sensorsystem nach Anspruch 1, **dadurch gekennzeichnet, dass** die erste Kommunikationsschnittstelle als drahtgebundene oder drahtlose Schnittstelle ausgebildet ist wobei die drahtlose Schnittstelle ausgewählt ist aus Kurzstrecken-Funktechnologie, einer Mittelstrecken-Funktechnologie oder einer Long-Range-Funktechnologie.

5. Modulares Sensorsystem nach Anspruch 1, **dadurch gekennzeichnet, dass** die zweite Kommunikationsschnittstelle als drahtlose Schnittstelle ausgebildet ist, wobei die drahtlose Schnittstelle ausgewählt ist aus Kurzstrecken-Funktechnologie, einer Mittelstrecken-Funktechnologie oder einer Long-Range-Funktechnologie.

6. Modulares Sensorsystem nach einem der vorhergehenden Ansprüche, **dadurch gekennzeichnet, dass** die Basiseinheit mindestens ein Sensormodul aufweist, welches derart eingerichtet ist, Sensordaten zu erfassen.

7. Modulares Sensorsystem nach einem der vorhergehenden Ansprüche, **dadurch gekennzeichnet, dass** die Basiseinheit mindestens einen Energiespeicher aufweist, der als Batterie, Akkumulator, Superkondensator, thermischer Energiespeicher, Brennstoffzelle, oder Solarzellenmodul mit oder ohne Pufferspeicher ausgebildet ist.

8. Modulares Sensorsystem nach einem der vorhergehenden Ansprüche, **dadurch gekennzeichnet, dass** die Sensorschnittstelle derart eingerichtet ist, das Sensormodul lösbar und frei konfigurierbar daran anzuordnen.

9. Verfahren zur Sensordatenübertragung mittels eines modularen Sensorsystems nach einem der Ansprüche 1 bis 7, umfassend die Schritte:
i. Erfassen von Sensordaten durch mindestens ein Sensormodul und/oder von mindestens einer weiteren Basiseinheit,
ii. Bereitstellen und Zwischenspeichern der Sensordaten in der mindestens einen Speichereinheit,
iii. Autonome, lokale Entscheidung der Basiseinheit welcher Übertragungsweg der Sensordaten gewählt werden soll,
iv. Übertragung der Sensordaten über eine erste Kommunikationsschnittstelle oder über eine zweite Kommunikationsschnittstelle,
**dadurch gekennzeichnet, dass** die Entscheidung welche Kommunikationsschnittstelle zur Übertragung der Sensordaten gewählt wird, lokal und dezentral durch die Basiseinheit auf Basis mindestens eines technischen und/oder wirtschaftlichen Kriteriums und/oder eines empfangs- oder verbindungsqualitätsbezogenen Parameters erfolgt.

10. Verfahren nach Anspruch 9, **dadurch gekennzeichnet, dass** mehrere Basiseinheiten eine Schwarmgemeinschaft bilden können.

11. Verfahren nach Anspruch 8 oder 9, **dadurch gekennzeichnet, dass** jede Basiseinheit eingerichtet ist, in regelmäßigen Zeitintervallen Zustandsinformationen innerhalb einer Schwarmgemeinschaft zu empfangen.

12. Verfahren nach Anspruch 8 bis 10, **dadurch gekennzeichnet, dass** zur Erfassung der Sensordaten unterschiedliche Sensormodule ihre Sensordaten mittels der Sensorschnittstelle an die Basiseinheit übertragen.

13. Verfahren nach Anspruch 8 bis 11, **dadurch gekennzeichnet, dass** die technischen und wirtschaftlichen Kriterien ausgewählt sind aus der Netzverfügbarkeit, Reichweite, Energiebedarf, Energiezustand des Energiespeichers, Datenmenge, Verbindungsqualität, Kostenaspekte und/oder aus Zustand-, Erreichbarkeits- oder Verfügbarkeitsinformationen mindestens einer weiteren Basiseinheit.

14. Verwendung eines modularen Sensorsystems nach einem der Ansprüche 1 bis 8 in einem Verfahren zur Sensordatenübertragung nach einem der Ansprüche 9 bis 13, sowie Verwendung eines Verfahrens zur Sensordatenübertragung nach einem der Ansprüche 9 bis 13.
